# EUROPÄISCHE PATENTSCHRIFT

(11) **EP 4 227 115 B1**
(45) Veröffentlichungstag und Bekanntmachung des Hinweises auf die Patenterteilung: **23.10.2024**
(21) Anmeldenummer: 23150662.7
(22) Anmeldetag: 09.01.2023
(51) Int. Cl.: B60C 11/04, B60C 11/13, B60C 11/03

(54) **FAHRZEUGLUFTREIFEN**
PNEUMATIC TYRE FOR VEHICLES
PNEUMATIQUE POUR VÉHICULE

(30) Priorität: 14.02.2022 DE 102022201497
(43) Veröffentlichungstag der Anmeldung: 16.08.2023
(73) Patentinhaber: Continental Reifen Deutschland GmbH, 30175 Hannover (DE)
(72) Erfinder: Wanka, Thomas, 30165 Hannover (DE); Herbst, Stephan, 30165 Hannover (DE); Rittweger, Stefan, 30165 Hannover (DE)
(74) Vertreter: Continental Corporation

(56) Entgegenhaltungen:
- EP-A1- 3 181 378
- EP-A1- 3 388 256
- EP-A1- 3 628 510
- DE-A1- 102019 111 987
- DE-A1- 102019 206 654
- DE-T5- 112017 007 106

## Beschreibung

Die Erfindung betrifft einen Fahrzeugluftreifen mit einem Laufstreifen mit zumindest einer durch eine Umfangsrille begrenzten schulterseitigen Profilrippe mit einem innerhalb der Bodenaufstandsfläche verlaufenden Rippeninnenabschnitt, einem außerhalb der Bodenaufstandsfläche verlaufenden Rippenaußenabschnitt und mit in einem Abstand vor der schulterseitigen Umfangsrille endenden Querrillen mit einer im Rippeninnenabschnitt in Umfangsrichtung ermittelten maximalen Rillenbreite von 2,0 mm bis 6,0 mm, wobei jede Querrille zwei einander gegenüberliegende Rillenwände, zwei Rillenkanten und eine an die eine Rillenwand angrenzende, zumindest abschnittsweise im Rippenaußenabschnitt ausgebildete und zumindest bis zum seitlichen Rand der Bodenaufstandsfläche reichende, in Erstreckungsrichtung der Querrille langgestreckt dreieckförmige, oberflächliche Ausnehmung aufweist.

Ein derartiger Fahrzeugluftreifen ist beispielsweise aus der EP 3 628 510 A1 bekannt. Der Reifen weist einen Laufstreifen mit einer schulterseitigen Profilrippe mit innerhalb der schulterseitigen Profilrippe endenden Querrillen auf. Die Querrillen weisen im Rippeninnenabschnitt, an der Laufstreifenperipherie, eine senkrecht zur Rillenmittellinie ermittelte maximale Breite von 4,0 mm bis 11,0 mm auf. Beim beschriebenen Ausführungsbeispiel setzt sich die Querrille aus einem abschnittsweise im Rippeninnenabschnitt und abschnittsweise im Rippenaußenabschnitt verlaufenden Rillenhauptabschnitt, einem gegenüber dem Rillenhauptabschnitt schmäler ausgeführten, laufstreifeninnenseitigen Rillenauslaufabschnitt und einem Rillenschulterabschnitt zusammen. Die eine Rillenwand endet am Rillenauslaufabschnitt und die andere Rillenwand ist im Rillenauslaufabschnitt fortgeführt, wobei der Rillenauslaufabschnitt der fortgeführten Rillenwand gegenüberliegend durch eine Flanke begrenzt ist, welche abschnittsweise zur Laufstreifenperipherie angefast ist und daher eine Schrägfläche (Fase) aufweist. Diese Rillenmerkmale sollen unter Aufrechterhaltung guter Wasserableiteigenschaften das Abrollgeräusch reduzieren. Der Querrille weist an der im Rillenauslaufabschnitt fortgeführten Rillenwand eine abschnittsweise im Rippenaußenabschnitt und abschnittsweise im Rippeninnenabschnitt ausgebildete, in Erstreckungsrichtung der Querrille langgestreckt dreieckförmige, oberflächliche Ausnehmung auf, wodurch die Entwässerungswirkung der Querrille weiter verbessert werden soll.

Bei Fahrzeugluftreifen der eingangs genannte Art ist es von Bedeutung, die in den schulterseitigen Profilrippen befindlichen Querrillen sowohl im Hinblick auf die Bodenhaftung als auch im Hinblick auf die Entwässerung möglichst optimal auszulegen. Die Querrillen weisen einerseits ein für die Entwässerung vorteilhaftes Leervolumen auf, reduzieren aber anderseits die Nettokontaktfläche des Laufstreifens, was die Bodenhaftung, insbesondere beim Fahren von Kurven mit hoher Geschwindigkeit, reduziert. In dieser Hinsicht ist eine weitere Verbesserung wünschenswert.

Der Erfindung liegt daher die Aufgabe zugrunde, bei einem Fahrzeugluftreifen der eingangs genannte Art den zwischen den Entwässerungseigenschaften und der Bodenhaftung, insbesondere der Bodenhaftung beim Fahren von Kurven mit hoher Geschwindigkeit, bestehenden Zielkonflikt besser als bisher zu bewältigen.

Gelöst wird die gestellte Aufgabe erfindungsgemäß dadurch, dass die oberflächliche Ausnehmung zumindest Großteils im Rippenaußenabschnitt ausgebildet ist und durch eine von der Rillenkante ausgehende Seitenfläche sowie einen langgezogen dreieckförmigen, in Richtung Laufstreifeninnseite kontinuierlich schmäler werdenden, auslaufenden Boden mit einer an der Rillenwand und/oder am Rillengrund liegenden Bodenkante begrenzt ist, wobei die Ausnehmung eine entlang der Bodenkante senkrecht gegenüber dem Niveau der Laufstreifenperiphere ermittelte, in Richtung Laufstreifenaußenseite abnehmende Tiefe aufweist.

Wie nachfolgend erläutert, ist die geometrische Ausgestaltung der oberflächlichen Ausnehmung auf die gewünschten Fahrbedingungen besonders vorteilhaft angepasst. Im Fahrbetrieb ist die sich ändernde Lage des Footprints insbesondere von der individuellen, beispielsweise von der Beladung des Fahrzeuges abhängigen, Fahrzeuglast sowie von den Spur- und Sturzeinstellung des Rades abhängig. Je nach Ausgestaltung der oberflächlichen Ausnehmung befindet sich diese im üblichen Fahrbetrieb außerhalb des Footprints oder reicht geringfügig in den Footprint hinein, wobei die Ausnehmung ein für die Entwässerung vorteilhaftes, zusätzliches Wasserreservoir zur Verfügung stellt. Unter dem beim Fahren von Kurven auftretenden Lastwechsel verlagert sich der Footprint in der entsprechenden Reifenschulter in Richtung Laufstreifenaußenseite, wodurch der aufgrund der abnehmenden Tiefe der Ausnehmung besonders steife Bereich der schulterseitigen Profilrippe mit den Unterfund in Kontakt tritt, was für die Bodenhaftung besonders vorteilhaft ist. Die in Richtung Laufstreifenaußenseite zunehmende Breite des Bodens ist für den Entwässerungseffekt der Ausnehmung vorteilhaft, da in dieser Hinsicht ein gewisser Ausgleich zur abnehmenden Tiefe der Ausnehmung erzielt wird.

Gemäß einer bevorzugten Ausführung weist die Tiefe der Ausnehmung am laufstreifeninnseitigen Ende der Bodenkante einen maximalen Wert von mindestens 2,0 mm und höchstens 60% der maximalen Tiefe der Querrille auf. Dies ist für die Entwässerungswirkung der Ausnehmung von Vorteil, wobei die Steifigkeit der Profilrippe im an die Ausnehmung angrenzenden Bereich kaum beeinflusst wird, was für die Bodenhaftung beim Fahren von Kurven mit hoher Geschwindigkeit günstig ist.

Eine vorteilhafte Variante der bevorzugten Ausführung besteht darin, dass der maximale Wert der Tiefe der Ausnehmung am laufstreifeninnseitigen Ende der Bodenkante 45% bis 55% der maximalen Tiefe der Querrille beträgt. Diese Variante ermöglicht eine besonders vorteilhaft ausbalancierte Lösung des zwischen den Entwässerungseigenschaften und der Bodenhaftung bestehenden Zielkonfliktes.

Gemäß einer weiteren bevorzugten Ausführung geht der Boden der Ausnehmung, im Längsschnitt durch die Querrillen betrachtet, an seinem außenseitigen Ende tangential in Außenfläche des Rippenaußenabschnittes über. Dadurch ist das Strömungsverhalten von über den Boden der Ausnehmung in Richtung Laufstreifenrand fließendem Wasser zusätzlich optimiert, sodass dieses auf verwirbelungsarme Weise über die Ausnehmung in Richtung Laufstreifenaußenseite abfließt. Diese Ausführung trägt somit zur weiteren Verbesserung der Entwässerungseigenschaften bei.

Ferner ist es günstig, wenn der Boden der Ausnehmung, im in Umfangsrichtung ausgerichteten Querschnitt betrachtet, parallel zur Laufstreifenperipherie verläuft.

Bevorzugt weist der Boden der Ausnehmung an seinem laufstreifenaußenseitigen Ende eine Breite von 1,5 mm bis 4,0 mm, insbesondere von 2,5 mm bis 3,5 mm, auf, was für die Entwässerung vorteilhaft ist.

Eine weitere vorteilhafte Ausführung ist dadurch gekennzeichnet, dass die Ausnehmung im Rippeninnenabschnitt in einem vom seitlichen Rand der Bodenaufstandsfläche in axialer Richtung ermittelten Abstand von zumindest 3,0 mm endet. Die Ausnehmung reicht somit auch im üblichen Fahrbetreib in den Footprint hinein, was vor allem für die Entwässerung von zusätzlichem Vorteil ist, wobei eine gute Bodenhaftung erhalten bleibt.

Gemäß einer weiter bevorzugten Ausführung endet die Ausnehmung im Rippenaußenabschnitt in einem am Niveau der Laufstreifenperipherie, quer zur Umfangsrichtung ermittelten Abstand von bis zu 10,0 mm, insbesondere von bis zu 3,5 mm, vor dem Ende der Querrille.

Bevorzugter Weise verläuft die Seitenfläche, im in Umfangsrichtung verlaufenden Querschnitt betrachtet, zur radialen Richtung unter einem Winkel von 2° bis 6°.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen Umfangsabschnitt einer schulterseitigen Profilrippe eines in die Ebene abgewickelten Laufstreifens eines Fahrzeugluftreifens mit einer Ausführungsvariante der Erfindung,
Fig. 2 einen Schnitt entlang der Linie II-II der Fig. 1,
Fig. 3 eine vergrößerte Draufsicht auf das Detail Z₃ der Fig. 1,
Fig. 4 einen Schnitt entlang der Linie IV-IV der Fig. 3,
Fig. 5 einen Schnitt entlang der Linie V-V der Fig. 3,
Fig. 6 einen Schnitt entlang der Linie VI-VI der Fig. 3,
Fig. 7 einen Schnitt entlang der Linie VII-VII der Fig. 3,
Fig. 8 einen Schnitt entlang der Linie VIII-VIII der Fig. 3,
Fig. 9 eine Ansicht gemäß der in Fig. 3 durch den Pfeil S₉ angedeuteten Sichtrichtung unter Berücksichtigung der Reifenkrümmung,
Fig. 10 eine Ansicht gemäß der in Fig. 3 durch den Pfeil S₁₀ angedeuteten Sichtrichtung unter Berücksichtigung der Reifenkrümmung, wobei die Profilrippe aufgeschnitten ist und
Fig. 11 eine Ansicht gemäß der in Fig. 3 durch den Pfeil S₁₁ angedeuteten Sichtrichtung unter Berücksichtigung der Reifenkrümmung, wobei die Profilrippe aufgeschnitten ist.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Kleintransporter mit zGM ≤ 3,5 t, Leichte LKWs mit zGM ≤ 7,5 t).

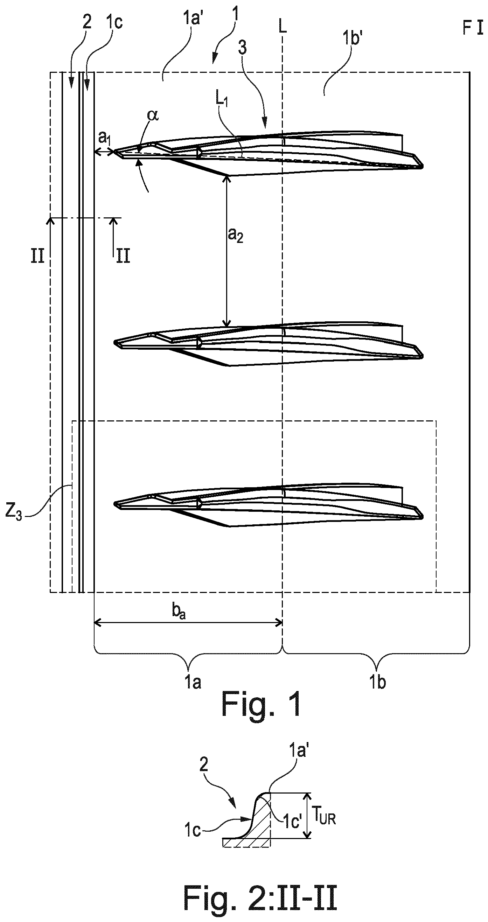

Fig. 1 zeigt eine Draufsicht auf einen Umfangsabschnitt einer schulterseitigen Profilrippe 1 eines Laufstreifens eines Fahrzeugluftreifens. Der seitliche Rand der Bodenaufstandsfläche des Laufstreifens ist in Fig. 1 durch eine gestrichelte Linie L gekennzeichnet, wobei die Bodenaufstandsfläche dem statisch ermittelten Footprint gemäß E.T.R.T.O.-Standards entspricht (Last bei 70 % der maximalen Tragfähigkeit bei einem Innendruck von 85 % nach E.T.R.T.O.-Norm). Der Laustreifen weist in seiner zweiten, nicht gezeigten Schulter eine weitere schulterseitige Profilrippe auf, deren Ausgestaltung von jener der schulterseitigen Profilrippe 1 vorzugsweise abweicht, sodass der Laufstreifen bezüglich der Reifenäquatorialebene eine asymmetrische Gestalt aufweist. Ein solcher Fahrzeugluftreifen wird bevorzugt derart auf der Achse eines Fahrzeuges, etwa einem PKW, montiert, dass die schulterseitige Profilrippe 1 der Fahrzeuginnenseite FI zugewandt ist.

Die schulterseitige Profilrippe 1 ist laufstreifeninnenseitig von einer beim gezeigten Ausführungsbeispiel in Draufsicht gerade verlaufenden, schulterseitigen Umfangsrille 2 begrenzt, welche in radialer Richtung auf die jeweils vorgesehene Profiltiefe T_{UR} (Fig. 2) ausgeführt ist, wobei die Profiltiefe T_{UR} für den bevorzugten Reifentyp üblicherweise 6,5 mm bis 13,0 mm, insbesondere bis zu 10,0 mm, beträgt.

Die schulterseitige Profilrippe 1 weist einen innerhalb der Bodenaufstandsfläche befindlichen Rippeninnenabschnitt 1a mit einer in der Laufstreifenperipherie liegenden Außenfläche 1a', einen außerhalb der Bodenaufstandsfläche befindlichen, zur nicht gezeigten Seitenwand verlaufenden Rippenaußenabschnitt 1b mit einer in der Laufstreifenperipherie liegenden Außenfläche 1b' auf und ist zur schulterseitigen Umfangsrille 2 durch eine Rippenflanke 1c begrenzt. Der Rippeninnenabschnitt 1a weist eine am Niveau der Außenfläche 1a' in axialer Richtung ermittelte Breite bₐ auf. Gemäß Fig. 2 weist die Rippenflanke 1c beim gezeigten Ausführungsbeispiel eine radial äußere Übergangsrundung 1c' auf, welche, im in Draufsicht in axialer Richtung ausgerichteten Querschnitt betrachtet (vergl. Lage der Linie II-II in Fig. 1), tangential ("knickfrei") in die Außenfläche 1a' übergeht.

Gemäß Fig. 1 ist die schulterseitige Profilrippe 1 über ihre Umfangserstreckung mit einer Vielzahl von innerhalb der schulterseitigen Profilrippe 1 endenden Querrillen 3 versehen, welche jeweils abschnittsweise im Rippeninnenabschnitt 1a und abschnittsweise im Rippenaußenabschnitt 1b verlaufen, der schulterseitigen Profilrippe 1 eine blockartige Struktur verleihen, vor der schulterseitigen Umfangsrille 2 in einem an der Außenfläche 1a' in axialer Richtung ermittelten Abstand a₁ von vorzugsweise 2,0 mm von 15,0 mm, insbesondere von 4,0 mm bis 10,0 mm, enden und - in Draufsicht betrachtet sowie bezogen auf entlang der jeweils größten Rillenlänge ausgerichtete, gerade verlaufende Linien L₁ - zur axialen Richtung unter einem Winkel α von 0° bis 20°, insbesondere von bis zu 15°, besonders bevorzugt von bis zu 7°, sowie vorzugsweise parallel zueinander verlaufen. In Umfangsrichtung unmittelbar aufeinanderfolgende Querrillen 3 weisen voneinander an der Außenfläche 1a' in Umfangsrichtung als kleinstmögliche Abstände ermittelte Abstände a₂ von vorzugsweise 15,0 mm von 35,0 mm auf.

Die weitere Ausgestaltung der Querrillen 3 wird nachfolgend anhand einer einzelnen Querrille 3 erläutert.

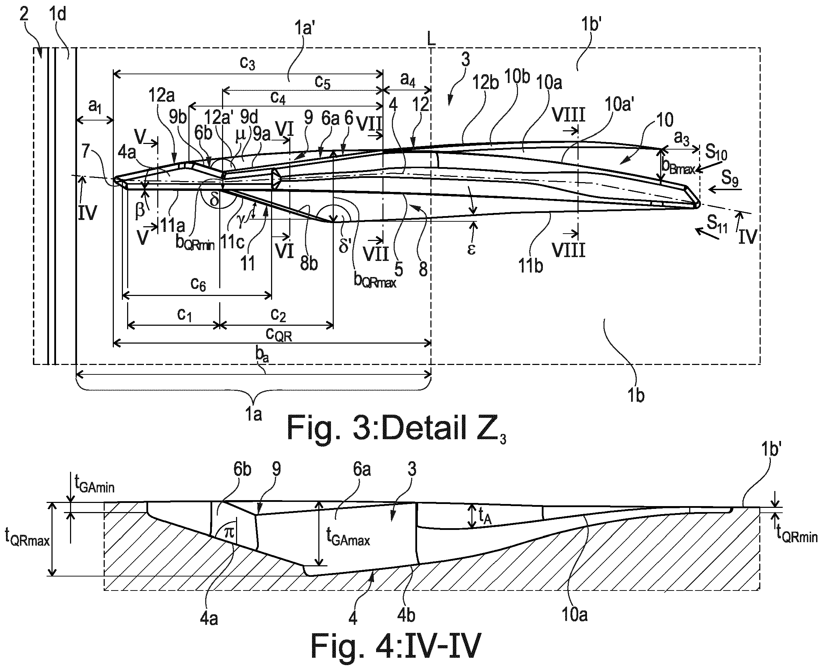

Die Querrille 3 weist eine am Niveau der Außenfläche 1a` ermittelte, vom erwähnten Abstand a₁ abhängige, in die axiale Richtung projizierte Länge c_{QR} (Fig. 3) und in radialer Richtung eine maximale Tiefe t_{QRmax} (Tiefe an der tiefsten Stelle, Fig. 4) von 70% bis 100% der Profiltiefe T_{UR} (Fig. 2) auf, wobei die Querrille 3 ausgehend von der tiefsten Stelle in insbesondere bekannter Weise zu ihrem laufstreifenaußenseitigen Ende kontinuierlich seichter wird und am laufstreifenaußenseitigen Ende eine minimale Tiefe t_{QRmin} (Fig. 4) von höchstens 1,0 mm, insbesondere von höchstens 0,5 mm, aufweist. Alternativ kann die Querrille 3 laufstreifenaußenseitig zur Außenfläche 1b' (Fig. 3) auslaufen.

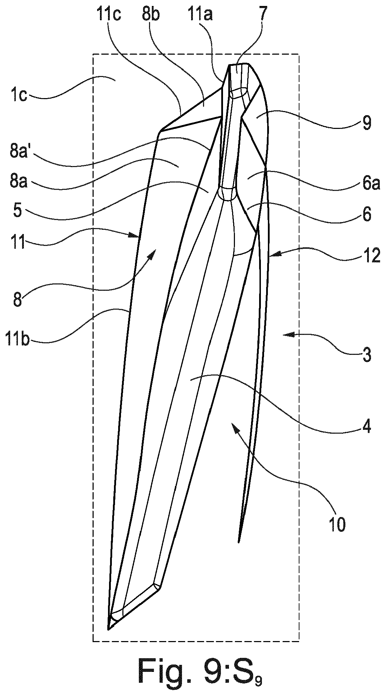

Wie Fig. 3 und Fig. 9 zeigen, weist die Querrille 3 einen Rillengrund 4, zwei Rillenwände 5, 6, an ihrem laufstreifeninnenseitigen Ende eine Endflanke 7, eine an die Rillenwand 5 angrenzende, sowohl im Rippeninnenabschnitt 1a (Fig. 3) als auch im Rippenaußenabschnitt 1b (Fig. 3) ausgebildete, in Draufsicht in Erstreckungsrichtung der Querrille 3 langgestreckt dreieckförmige, fasenartige Erweiterung 8, einen von der Rillenwand 6 mitbegrenzten, im Rippeninnenabschnitt 1a (Fig. 3) befindlichen, die Querrille 3 lokal verengenden, in Draufsicht in Erstreckungsrichtung der Querrille 3 langgestreckt dreieckförmig, insgesamt keilförmigen Vorsprung 9 und eine an die Rillenwand 6 angrenzende, Großteils im Rippenaußenabschnitt 1b (Fig. 3) ausgebildete und in den Rippeninnenabschnitt 1a (Fig. 3) reichende, in Draufsicht in Erstreckungsrichtung der Querrille 3 langgestreckt dreieckförmige, oberflächliche Ausnehmung 10 auf.

Die Querrille 3 ist an der Laufstreifenperipherie durch eine zweifach geknickte Rillenkante 11, an welcher die fasenartige Erweiterung 8 ausgebildet ist, und eine Rillenkante 12, entlang welcher der Vorsprung 9 und die Ausnehmung 10 ausgebildet sind, begrenzt. Die nachfolgenden Ausführungen zu den Rillenkanten 11, 12 beziehen sich auf die Draufsicht.

Gemäß Fig. 3 setzt sich die Rillenkante 11 aus einem an der Außenfläche 1a' befindlichen, innenseitigen Kantenabschnitt 11a, einem an der Außenfläche 1a' befindlichen, mittleren Kantenabschnitt 11c und einem abschnittsweise an der Außenfläche 1a' und abschnittsweise an der Außenfläche 1b' befindlichen, außenseitigen Kantenabschnitt 11b zusammen. Der innenseitige Kantenabschnitt 11a weist eine in die axiale Richtung projizierte Länge c₁ von 25% bis 40%, insbesondere von bis zu 35%, der Länge c_{QR} auf und verläuft gerade sowie zur axialen Richtung unter einem Winkel β von bis zu ± 2°, insbesondere von 0°. Der mittlere Kantenabschnitt 11c weist eine in die axiale Richtung projizierte Länge c₂ von 25% bis 40%, insbesondere von zumindest 30%, der Länge c_{QR} auf, verläuft gerade sowie zur axialen Richtung unter einem Winkel γ von 10° bis 20° und schließt mit dem innenseitigen Kantenabschnitt 11a an der der Querrille 3 abgewandten Seite einen stumpfen Winkel δ ein. Der außenseitige Kantenabschnitt 11b verläuft, insbesondere bedingt durch die gekrümmte Reifenaußenkontur, zumindest abschnittsweise leicht bogenförmig sowie an der Außenfläche 1a' zur axialen Richtung unter einem Winkel ε von 0° bis 10°, insbesondere von bis zu 5°, ist zum mittleren Kantenabschnitt 11c bezüglich der axialen Richtung vorzugsweise gegensinnig geneigt und schließt mit dem mittleren Kantenabschnitt 11c an der der Querrille 3 zugewandten Seite einen stumpfen Winkel δ` (Fig. 3) ein. Die stumpfen Winkel δ, δ' betragen vorzugsweise jeweils 150° bis 170°.

Die Rillenkante 12 setzt sich aus einem an der Außenfläche 1a' befindlichen, leicht bogenförmig verlaufenden, innenseitigen Kantenabschnitt 12a mit einer in die axiale Richtung projizierten Länge c₃ von 80% bis 90% der Länge c_{QR} und einem abschnittsweise an der Außenfläche 1a' und abschnittsweise an der Außenfläche 1b' befindlichen, leicht bogenförmig verlaufenden, außenseitigen Kantenabschnitt 12b, welcher laufstreifenaußenseitig in einem quer zur Umfangsrichtung am Niveau der Außenfläche 1b' ermittelten Abstand a₃ von bis zu 10,0 mm, insbesondere von bis zu 3,5 mm, vor dem Ende der Querrille 3 endet, zusammen. Die erwähnte Länge c₃ des innenseitigen Kantenabschnittes 12a und der erwähnte Abstand a₁ sind vorzugsweise derart aufeinander abgestimmt, dass die Kantenabschnitte 12a, 12b an ihrem gegenseitigen Anschluss zum seitlichen Rand der Bodenaufstandsfläche in axialer Richtung einen Abstand a₄ von zumindest 3,0 mm aufweisen.

Die Querrille 3 weist eine an der Außenfläche 1a', in Umfangsrichtung ermittelte maximale Breite b_{QRmax} von 5,0 mm bis 9,0 mm, insbesondere von 6,5 mm bis 7,0 mm, auf, wobei die Stelle der maximalen Breite b_{QRmax} beim gezeigten Ausführungsbeispiel am gegenseitigen Anschluss des Kantenabschnittes 11b an den Kantenabschnitt 11c vorliegt. Die maximale Breite b_{QRmax} ist daher im Rippeninnenabschnitt 1a sowie an der Laufstreifenperipherie ermittelt, wobei die genaue Lage der maximalen Breite b_{QRmax} von der erwähnten Lage abweichen kann und wobei die maximale Breite b_{QRmax} auch über einen in Fig. 3 nicht bezeichneten Abschnitt der Querrille 3 vorhanden sein kann.

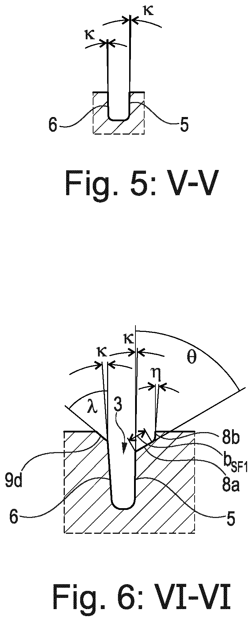

Wie Fig. 5 bis Fig. 7 zeigen, verlaufen die Rillenwände 5, 6, im in Draufsicht in Umfangsrichtung ausgerichteten Querschnitt betrachtet (vergl. Lage der Linien V-V, VI-VI, VII-VII in Fig. 3), zur radialen Richtung unter einem Winkel κ von 0° bis 6°, insbesondere von bis zu 5°, wobei der Winkel κ konstant ist oder in verschiedenen Bereichen der Querrille 3 unterschiedliche Größen aufweisen kann. Beispielsweise kann die Größe des Winkels κ der Rillenwand 6 im Bereich des Vorsprunges 9 von der Größe des Winkels κ der Rillenwand 6 im Bereich außerhalb des Vorsprunges 9 abweichen.

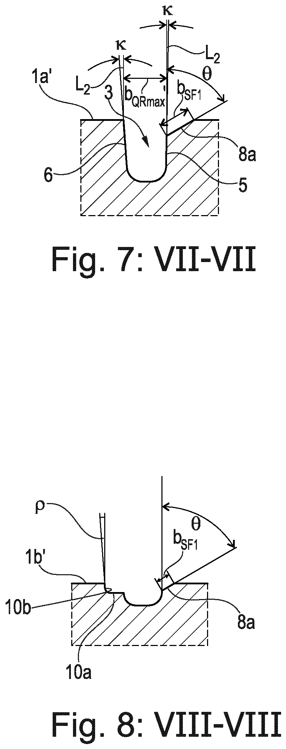

Wie Fig. 7 zeigt, weist die Querrille 3 im Rippeninnenabschnitt 1a, im in Draufsicht in Umfangsrichtung ausgerichteten Querschnitt betrachtet, eine maximale Rillenbreite b_{QRmax}' von 2,0 mm bis 6,0 mm, insbesondere von 2,5 mm bis 5,5 mm, auf (vergl. Lage der Linie VII-VII in Fig. 3), welche als kleinstmöglicher Abstand zwischen zwei in radialer Richtung durch die radial äußeren Enden der Rillenwände 5, 6 verlaufenden Linien L₂ ermittelt ist. Bei der Ermittlung der maximale Rillenbreite b_{QRmax}' bleiben daher die Erweiterung 8, der Vorsprung 9 und die Ausnehmung 10 unberücksichtigt.

Gemäß Fig. 4 setzt sich der Rillengrund 4, im Längsschnitt durch die Querrille 3 betrachtet (vergl. Lage der Linie IV-IV in Fig. 3), aus einem laufstreifeninnenseitigen Grundabschnitt 4a und einem laufstreifenaußenseitigen Grundabschnitt 4b zusammen. Der laufstreifeninnenseitige Grundabschnitt 4a verläuft, im erwähnten Längsschnitt betrachtet, zur radialen Richtung unter einem konstanten Winkel π von 60° bis 80°, wobei er derart geneigt ist, dass die Tiefe der Querrille 3 im Bereich des Grundabschnittes 4a zur Endflanke 7 (Fig. 3) kontinuierlich abnimmt. Der Grundabschnitt 4a schließt laufstreifeninnenseitig in einer in radialer Richtung ermittelten Tiefe t_{GAmin} (in Fig. 4 angedeutet) von 0,8 mm bis 1,5 mm an die Endflanke 7 (Fig. 3) an, endet laufstreifenaußenseitig im Bereich des Vorsprunges 9 sowie in einer in radialer Richtung ermitteln Tiefe t_{GAmax} und weist, in Draufsicht betrachtet, eine in die axiale Richtung projizierte Länge c₆ (Fig. 3) 40% bis 60% der Länge c_{QR} auf. Der Winkel π, die Länge c₆ und die Tiefe t_{GAmin} sind bevorzugt derart aufeinander abgestimmt, dass die Tiefe t_{GAmax} der um 0,5 mm bis 1,5 mm verringerten maximalen Tiefe t_{QRmax} der Querrille 3 beträgt.

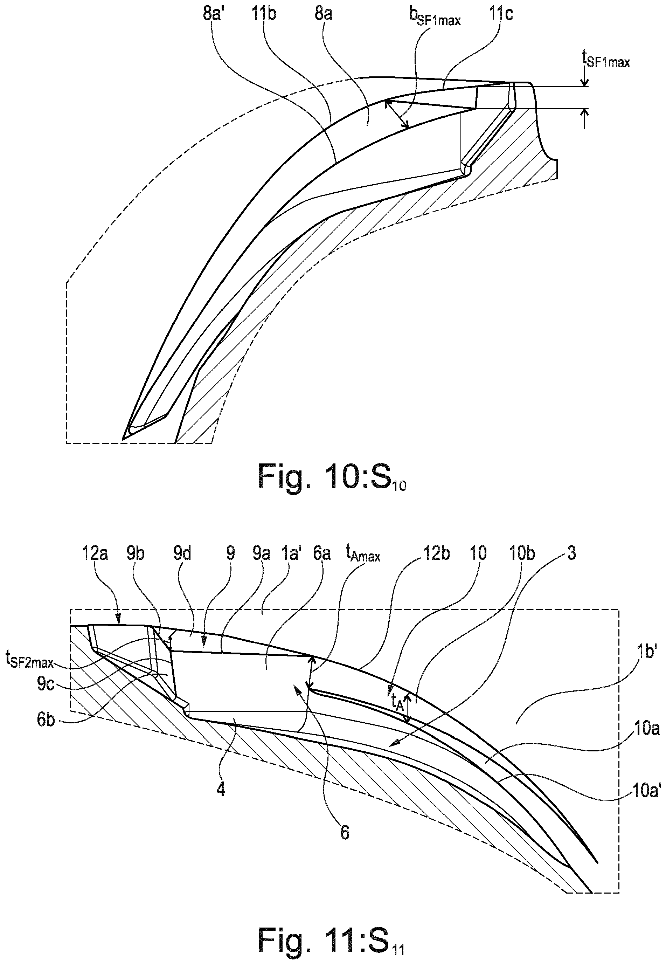

Gemäß Fig. 9 ist fasenartige Erweiterung 8 entlang des außenseitigen Kantenabschnittes 11b und des mittleren Kantenabschnittes 11c ausgebildet, weist eine an der Querrille 3 liegende Dreieckbasis (längste Seite des Dreieckes) auf und ist in radialer Richtung durch eine vom außenseitigen Kantenabschnitt 11b ausgehende, zur Rillenwand 5 reichende Schrägfläche 8a sowie ferner durch eine vom mittleren Kantenabschnitt 11c ausgehende, zur Rillenwand 5 reichende Seitenfläche 8b begrenzt. Die Seitenfläche 8b verläuft, im in Draufsicht in Umfangsrichtung ausgerichteten Querschnitt betrachtet, zur radialen Richtung unter einem Winkel η (Fig. 6, vergl. Lage der Linie VI-VI in Fig. 3) von 2° bis 6°, insbesondere von 3° bis 5°. Die Schrägfläche 8a ist außenseitig entlang des Rillengrundes 4 fortgeführt, weist eine an der Rillenwand 5 liegende, ebenfalls entlang des Rillengrundes 4 fortgeführte, radial innere Begrenzungskante 8a' auf, verläuft, im in Draufsicht in Umfangsrichtung ausgerichteten Querschnitt betrachtet, zur radialen Richtung unter einem Winkel θ (Fig. 6 bis Fig. 8, vergl. Lage der Linien VI-VI, VII-VII und VIII-VIII in Fig. 3) von 20° bis 40°, insbesondere von 25° bis 35°, wobei der Winkel θ konstant ist oder über die Erstreckung der Schrägfläche 8a um bis zu 2° variiert, und weist ferner, im erwähnten Querschnitt betrachtet, eine Breite b_{SF1} (Fig. 6 bis Fig. 8) auf, welche am gegenseitigen Anschluss des außenseitigen Kantenabschnittes 11b und des mittleren Kantenabschnittes 11c ihren größten Wert b_{SF1max} (andeutet in Fig. 10) von 1,5 mm bis 3,0 mm, insbesondere von 2,0 mm bis 2,5 mm, aufweist. Gemäß Fig. 10 reicht die Schrägfläche 8a am an der Seitenfläche 11c liegenden laufstreifeninnenseitigen Ende der radial inneren Begrenzungskante 8a' in eine in radialer ermittelte Tiefe t_{SF1max} von vorzugsweise 1,0 mm bis 2,0 mm.

Gemäß Fig. 3 ist der von der Rillenwand 6 mitbegrenzte, keilförmige Vorsprung 9 von der Endflanke 7 und vom seitlichen Rand der Bodenaufstandsfläche (Linie L) beabstandet, wobei der Vorsprung 9 - wie insbesondere Fig. 3 in Kombination mit Fig. 11 zeigt - in radialer Richtung durch eine in Draufsicht (Fig. 3) in Erstreckungsrichtung der Querrille 3 langgestreckte, dreieckförmige Schrägfläche 9d mit einer am innenseitigen Kantenabschnitt 12a liegende Basis und ferner durch zum Rillengrund 4 verlaufende Wandabschnitte 6a, 6b der Rillenwand 6 (vergl. Fig. 4) begrenzt ist, wobei der Wandabschnitt 6b der Endflanke 7 (Fig. 3) und der Wandabschnitt 6a dem seitlichen Rand der Bodenaufstandsfläche (Fig. 3: Linie L) zugewandt ist. Gemäß Fig. 3 geht die dreieckförmige Schrägfläche 9d von einem unmittelbar an den innenseitigen Kantenabschnitt 12b anschließenden, die Basis des Dreieckes bildenden Abschnittteil 12a' des außenseitigen Kantenabschnittes 12a aus, wobei der Abschnittteil 12a', jeweils in Draufsicht betrachtet, eine in die axiale Richtung projizierte Länge c₄ von 50% bis 70%, insbesondere von 55% bis 65%, der Länge c_{QR} aufweist. Die Länge c₄ ist daher die Länge der Schrägfläche 9d an der Außenfläche 1a'. Die Schrägfläche 9d verläuft, im in Draufsicht in Umfangsrichtung ausgerichteten Querschnitt betrachtet, zur radialen Richtung unter einem Winkel λ (Fig. 6, vergl. Lage der Schnittlinie VI-VI in Fig. 3) von 40° bis 50°, wobei der Winkel λ konstant ist oder über die Erstreckung der Schrägfläche 9d um bis zu 3° variiert. Gemäß Fig. 11 weist der Vorsprung 9 am gegenseitigen Anschluss der Schrägfläche 9d und des Wandabschnittes 6a eine Vorsprungkante 9a, am gegenseitigen Anschluss der Schrägfläche 9d und des Wandabschnittes 6b eine Vorsprungkante 9b und am gegenseitigen Anschluss der Wandabschnitte 6a, 6b eine Vorsprungkante 9c auf. Die Vorsprungkante 9a weist, in Draufsicht betrachtet, eine in die axiale Richtung projizierte Länge c₅ (Fig. 3) von 70% bis 90%, insbesondere von zumindest 80%, der erwähnten Länge c₄ auf. Die Vorsprungkanten 9a, 9b schließen, in Draufsicht betrachtet, miteinander einen Winkel µ (Fig. 3) von 150° bis 160° ein. Die Schrägfläche 9d reicht am gegenseitigen Anschluss der Vorsprungkanten 9a, 9b in radialer Richtung am tiefsten in Querrille 3 hinein, wobei der gegenseitigen Anschluss der Vorsprungkanten 9a, 9b in einer in radialer Richtung ermittelten Tiefe t_{SF2max} von 0,7 mm bis 1,5 mm liegt. Die Ausgestaltung des Vorsprunges 9 ist ferner derart, dass die Querrille 3 an der Vorsprungkante 9c eine zwischen den Rillenwänden 5, 6 in Umfangsrichtung als kleinstmöglichen Abstand ermittelte Breite b_{QRmin} (Fig. 3) von 1,0 mm bis 4,0 mm, insbesondere von 1,5 mm bis 3,0 mm, aufweist. Bevorzugt ist die Breite b_{QRmin} derart auf die Breite b_{QRmax}' (Fig. 7) abgestimmt, dass die Breite b_{QRmin} maximal 50% der Breite b_{QRmax}' beträgt. Die Neigung der Vorsprungkante 9c relativ zur radialen Richtung ergibt sich aus dem bereits erwähnten Winkel κ (Fig. 5 bis Fig. 8) der Rillenwand 6 und der damit verbundenen etwaigen Neigung der Wandabschnitte 6a, 6b.

Gemäß Fig. 3 und Fig. 11 ist die an die Rillenwand 6 angrenzende Ausnehmung 10 durch eine Seitenfläche 10b, welche von innenseitigen Kantenabschnitt 12b ausgeht, und einen in Draufsicht in axialer Richtung langgezogen dreieckförmigen Boden 10a, welcher an seinem der nicht gezeigten Seitenwand näher befindlichen außenseitigen Bereich zum Rillengrund 4 (Fig. 11) und in seinem innenseitigen Bereich zur Rillenwand 6 (Fig. 4) verläuft, begrenzt. Der Boden 10a wird in Richtung Laufstreifeninnseite kontinuierlich schmäler und läuft am Wandabschnitt 6a aus. Der Boden 10a geht, im Längsschnitt durch die Querrille 3 betrachtet, an seinem außenseitigen Ende tangential (knickfrei) in die Außenfläche 1b' über (Fig. 4), verläuft, im in Umfangsrichtung verlaufenden Querschnitt betrachtet, parallel zur jeweiligen Außenfläche 1a', 1b' (Fig. 8, vergl. Lage der Linie VIII-VIII in Fig. 3) und weist an seinem laufstreifenaußenseitigen Ende eine in Umfangsrichtung ermittelte Breite b_{Bmax} (Fig. 3) von 1,5 mm bis 4,0 mm, insbesondere von 2,5 mm bis 3,5 mm, sowie an der Rillenwand 6, eine außenseitig entlang des Rillengrundes 4 fortgeführte Bodenkante 10a` auf. Gemäß Fig. 11 weist die Ausnehmung 10 eine entlang der Bodenkante 10a' senkrecht gegenüber dem Niveau der Außenfläche 1a' bzw. 1b' ermittelte Tiefe t_{A} auf, welche in Richtung Laufstreifenaußenseite kontinuierlich abnimmt und am laufstreifeninnenseitigen Ende einen maximalen Wert t_{Amax} von mindestens 2,0 mm und höchstens 60% der maximalen Tiefe t_{QRmax} (Fig. 4) der Querrille 3 aufweist. Bevorzugt beträgt der maximale Wert t_{Amax} 45% bis 55% der maximalen Tiefe t_{QRmax} (Fig. 4) der Querrille 3. Die Seitenfläche 10b ist eine in axialer Richtung langgezogen dreieckförmige Fläche, welche in entgegengesetzter Richtung zum Boden 10a ausläuft, daher in Richtung Laufstreifenaußenseite kontinuierlicher schmäler wird, und, im in Umfangsrichtung verlaufenden Querschnitt betrachtet, zur radialen Richtung unter einem Winkel ρ von 2° bis 6° verläuft (Fig. 8, vergl. Lage der Linie VIII-VIII in Fig. 3). Entsprechend der beschriebenen Ausgestaltung der Rillenkante 12 endet die Ausnehmung 10 im Rippeninnenabschnitt 1a im bereits erwähnten Abstand a₄ (Fig. 3) vom seitlichen Rand der Bodenaufstandsfläche (Linie L) und im Rippenaußenabschnitt 1b im bereits erwähnten, quer zur Umfangsrichtung am Niveau der Außenfläche 1b' ermittelten Abstand a₃ vor dem Ende der Querrille 3.

Die Erfindung ist auf das beschriebene Ausführungsbeispiel nicht beschränkt.

Insbesondere sind der Vorsprung 9 und die fasenartige Erweiterung 8 optional. Die oberflächliche Ausnehmung 10 kann bis zum laufstreifenaußenseitigen Ende der Querrille reichen. Der Rillengrund 4 kann sowohl im Längsschnitt durch die Querrille 3 betrachtet als im Querschnitt durch die Querrille 3 betrachtet eine von der beschriebenen Gestalt abweichende Gestalt aufweisen. Die Bodenkante 10a` des Bodes 10a der Ausnehmung 10 kann je nach Ausgestaltung der Querrille 3 ausschließlich am Rillengrund 4, ausschließlich an der Rillenwand 6 oder sowohl am Rillengrund 4 als auch an der Rillenwand 6 liegen.

### Bezugszeichenliste

- 1: schulterseitige Profilrippe
- 1a: Rippeninnenabschnitt
- 1a': Außenfläche
- 1b: Rippenaußenabschnitt
- 1b': Außenfläche
- 1c: Rippenflanke
- 1c': radial äußere Übergangsrundung
- 2: schulterseitigeUmfangsrille
- 3: Querrille
- 4: Rillengrund
- 4a: laufstreifeninnenseitiger Grundabschnitt
- 4b: laufstreifenaußenseitiger Grundabschnitt
- 5: Rillenwand
- 6: Rillenwand
- 6a: Wandabschnitt
- 6b: Wandabschnitt
- 7: Endflanke
- 8: fasenartige Erweiterung
- 8a: Schrägfläche
- 8a': radial innere Begrenzungskante
- 8b: Seitenfläche
- 9: Vorsprung
- 9a, 9b, 9c: Vorsprungkante
- 9d: Schrägfläche
- 10: oberflächliche Ausnehmung
- 10a: Boden
- 10a': Bodenkante
- 10b: Seitenfläche
- 11: Rillenkante
- 11a: innenseitiger Kantenabschnitt
- 11b: außenseitiger Kantenabschnitt
- 11c: mittlerer Kantenabschnitt
- 12: Rillenkante
- 12a: innenseitiger Kantenabschnitt
- 12a`: Abschnittteil
- 12b: außenseitiger Kantenabschnitt
- a₁, a₂, a₃, a₄: Abstand
- bₐ, b_{SF1}: Breite
- b_{Bmax}: Breite
- b_{QRmin}: Breite
- b_{QRmax}: maximale Breite
- b_{QRmax}': maximale Rillenbreite
- b_{SF1max}: größter Wert
- c_{A}, c_{QR}, C₁, c₂, c₃, c₄, c₅, c₆: Länge
- FI: Fahrzeuginnenseite
- L: Linie (seitlicher Rand der Bodenaufstandsfläche)
- L₁, L₂: Linie
- S₉, S₁₀, S₁₁: Pfeil (Sichtrichtung)
- t_{A}: Tiefe
- t_{Amax}: maximaler Wert
- t_{GAmin}, t_{GAmax}: Tiefe
- t_{QRmax}: maximale Tiefe
- t_{QRmin}: minimale Tiefe
- t_{SF1max}, t_{SF2max}: Tiefe
- T_{UR}: Profiltiefe
- Z₃: Detail
- α, β, γ, ε, η, θ, κ, λ, µ, π, ρ: Winkel
- δ, δ': stumpfer Winkel

## Patentansprüche

1. Fahrzeugluftreifen mit einem Laufstreifen mit zumindest einer durch eine Umfangsrille (2) begrenzten schulterseitigen Profilrippe (1) mit einem innerhalb der Bodenaufstandsfläche verlaufenden Rippeninnenabschnitt (1a), einem außerhalb der Bodenaufstandsfläche verlaufenden Rippenaußenabschnitt (1b) und mit in einem Abstand (a₁) vor der schulterseitigen Umfangsrille (2) endenden Querrillen (3) mit einer im Rippeninnenabschnitt (1a) in Umfangsrichtung ermittelten maximalen Rillenbreite (b_{QRmax}') von 2,0 mm bis 6,0 mm, wobei jede Querrille (3) zwei einander gegenüberliegende Rillenwände (5, 6), zwei Rillenkanten (11, 12) und eine an die eine Rillenwand (6) angrenzende, zumindest abschnittsweise im Rippenaußenabschnitt (1b) ausgebildete und zumindest bis zum seitlichen Rand der Bodenaufstandsfläche (Linie L) reichende, in Erstreckungsrichtung der Querrille (3) langgestreckt dreieckförmige, oberflächliche Ausnehmung (10) aufweist,
**dadurch gekennzeichnet,**
**dass** die oberflächliche Ausnehmung (10) zumindest Großteils im Rippenaußenabschnitt (1b) ausgebildet ist und durch eine von der Rillenkante (12) ausgehende Seitenfläche (10b) sowie einen langgezogen dreieckförmigen, in Richtung Laufstreifeninnseite kontinuierlich schmäler werdenden, auslaufenden Boden (10a) mit einer an der Rillenwand (6) und/oder am Rillengrund (4) liegenden Bodenkante (10a') begrenzt ist, wobei die Ausnehmung (10) eine entlang der Bodenkante (10a') senkrecht gegenüber dem Niveau der Laufstreifenperiphere ermittelte, in Richtung Laufstreifenaußenseite abnehmende Tiefe (t_{A}) aufweist.

2. Fahrzeugluftreifen nach Anspruch 1, **dadurch gekennzeichnet, dass** die Tiefe (t_{A}) der Ausnehmung (10) am laufstreifeninnseitigen Ende der Bodenkante (10a') einen maximalen Wert (t_{Amax}) von mindestens 2,0 mm und höchstens 60% der maximalen Tiefe (t_{QRmax}) der Querrille (3) aufweist.

3. Fahrzeugluftreifen nach Anspruch 2, **dadurch gekennzeichnet, dass** der maximale Wert (t_{Amax}) der Tiefe (t_{A}) der Ausnehmung (10) am laufstreifeninnseitigen Ende der Bodenkante (10a') 45% bis 55% der maximalen Tiefe (t_{QRmax}) der Querrille (3) beträgt.

4. Fahrzeugluftreifen nach einem der Ansprüche 1 bis 3, **dadurch gekennzeichnet, dass** der Boden (10a) der Ausnehmung (10), im Längsschnitt durch die Querrille (3) betrachtet, an seinem außenseitigen Ende tangential in Außenfläche (1b') des Rippenaußenabschnittes (1b) übergeht.

5. Fahrzeugluftreifen nach einem der Ansprüche 1 bis 4, **dadurch gekennzeichnet, dass** der Boden (10a) der Ausnehmung (10), im in Umfangsrichtung ausgerichteten Querschnitt betrachtet, parallel zur Laufstreifenperipherie verläuft.

6. Fahrzeugluftreifen nach einem der Ansprüche 1 bis 5, **dadurch gekennzeichnet, dass** der Boden (10a) der Ausnehmung (10) an seinem laufstreifenaußenseitigen Ende eine Breite (b_{Bmax}) von 1,5 mm bis 4,0 mm, insbesondere von 2,5 mm bis 3,5 mm, aufweist.

7. Fahrzeugluftreifen nach einem der Ansprüche 1 bis 6, **dadurch gekennzeichnet, dass** die Ausnehmung (10) im Rippeninnenabschnitt (1a) in einem vom seitlichen Rand der Bodenaufstandsfläche (Linie L) in axialer Richtung ermittelten Abstand (a₄) von zumindest 3,0 mm endet.

8. Fahrzeugluftreifen nach einem der Ansprüche 1 bis 7, **dadurch gekennzeichnet, dass** die Ausnehmung (10) im Rippenaußenabschnitt (1b) in einem am Niveau der Laufstreifenperipherie, quer zur Umfangsrichtung ermittelten Abstand (a₃) von bis zu 10,0 mm, insbesondere von bis zu 3,5 mm, vor dem Ende der Querrille (3) endet.

9. Fahrzeugluftreifen nach einem der Ansprüche 1 bis 8, **dadurch gekennzeichnet, dass** die Seitenfläche (10b), im in Umfangsrichtung verlaufenden Querschnitt betrachtet, zur radialen Richtung unter einem Winkel (ρ) von 2° bis 6° verläuft.

## Claims

1. Pneumatic vehicle tyre having a tread with at least one shoulder-side profile rib (1) which is delimited by a circumferential groove (2) and has a rib inner portion (1a), running within the ground contact area, has a rib outer portion (1b), running outside the ground contact area, and has transverse grooves (3), ending at a distance (a₁) from the shoulder-side circumferential groove (2) and having a maximum groove width (b_{QRmax}'), which is determined in the rib inner portion (1a) in a circumferential direction, of 2.0 mm to 6.0 mm, wherein each transverse groove (3) has two groove walls (5, 6) situated opposite one another, has two groove edges (11, 12) and has a surface recess (10) which adjoins one groove wall (6) and which is formed at least sectionally in the rib outer portion (1b) and which extends at least as far as the lateral edge of the ground contact area (line L) and which is elongately triangular in the direction of extent of the transverse groove (3),
**characterized**
**in that** the surface recess (10) is formed at least for the most part in the rib outer portion (1b) and is delimited by a side surface (10b), departing from the groove edge (12), and also by an elongately triangular bottom (10a), running out and becoming narrower continuously in the direction of the tread inner side and having a bottom edge (10a') at the groove wall (6) and/or at the groove base (4), wherein the recess (10) has a depth (t_{A}), determined along the bottom edge (10a') perpendicularly to the level of the tread periphery, which decreases in the direction of the tread outer side.

2. Pneumatic vehicle tyre according to Claim 1, **characterized in that** the depth (t_{A}) of the recess (10) has, at the tread-inner-side end of the bottom edge (10a`), a maximum value (t_{Amax}) of at least 2.0 mm and at most 60% of the maximum depth (t_{QRmax}) of the transverse groove (3).

3. Pneumatic vehicle tyre according to Claim 2, **characterized in that** the maximum value (t_{Amax}) of the depth (t_{A}) of the recess (10) at the tread-inner-side end of the bottom edge (10a') is 45% to 55% of the maximum depth (t_{QRmax}) of the transverse groove (3).

4. Pneumatic vehicle tyre according to one of Claims 1 to 3, **characterized in that** the bottom (10a) of the recess (10), when viewed in a longitudinal section through the transverse groove (3), transitions at its outer end tangentially into the outer surface (1b') of the rib outer portion (1b).

5. Pneumatic vehicle tyre according to one of Claims 1 to 4, **characterized in that** the bottom (10a) of the recess (10), when viewed in a cross section oriented in the circumferential direction, runs parallel to the tread periphery.

6. Pneumatic vehicle tyre according to one of Claims 1 to 5, **characterized in that**, at its tread-outer-side end, the bottom (10a) of the recess (10) has a width (bsmax) of 1.5 mm to 4.0 mm, in particular of 2.5 mm to 3.5 mm.

7. Pneumatic vehicle tyre according to one of Claims 1 to 6, **characterized in that** the recess (10) ends in the rib inner portion (1a) at a distance (a₄), determined from the lateral edge of the ground contact area (line L) in the axial direction, of at least 3.0 mm.

8. Pneumatic vehicle tyre according to one of Claims 1 to 7, **characterized in that** the recess (10) ends in the rib outer portion (1b) at a distance (as), determined at the level of the tread periphery transversely to the circumferential direction, of up to 10.0 mm, in particular of up to 3.5 mm, before the end of the transverse groove (3).

9. Pneumatic vehicle tyre according to one of Claims 1 to 8, **characterized in that** the side surface (10b), when viewed in a cross section extending in the circumferential direction, runs at an angle (ρ) of 2° to 6° to the radial direction.

## Revendications

1. Pneumatique de véhicule avec une bande de roulement avec au moins une nervure de profil (1) côté épaulement, délimitée par une rainure circonférentielle (2), avec une section intérieure de nervure (1a) s'étendant à l'intérieur de la surface de contact avec le sol, une section extérieure de nervure (1b) s'étendant à l'extérieur de la surface de contact avec le sol et avec des rainures transversales (3) se terminant à une distance (a₁) avant la rainure circonférentielle (2) côté épaulement, avec une largeur de rainure maximale (b_{QRmax}') déterminée dans la section intérieure de nervure (1a) dans la direction circonférentielle de 2,0 mm à 6,0 mm, chaque rainure transversale (3) présentant deux parois de rainure (5, 6) opposées l'une à l'autre, deux arêtes de rainure (11, 12) et un évidement superficiel (10) adjacent à l'une des parois de rainure (6), réalisé au moins par sections dans la section extérieure de nervure (1b) et s'étendant au moins jusqu'au bord latéral de la surface de contact avec le sol (ligne L), de forme triangulaire étirée longitudinalement dans la direction d'extension de la rainure transversale (3),
**caractérisé en ce**
**que** l'évidement superficiel (10) est réalisé au moins en grande partie dans la section extérieure de nervure (1b) et est délimité par une surface latérale (10b) partant de l'arête de rainure (12) ainsi que par un fond triangulaire allongé qui se rétrécit continuellement en direction du côté intérieur de la bande de roulement, avec une arête de fond (10a') située sur la paroi de rainure (6) et/ou sur la base de rainure (4), l'évidement (10) présentant une profondeur (t_{A}) déterminée le long de l'arête de fond (10a') perpendiculairement par rapport au niveau de la périphérie de la bande de roulement, diminuant en direction du côté extérieur de la bande de roulement.

2. Pneumatique de véhicule selon la revendication 1, **caractérisé en ce que** la profondeur (t_{A}) de l'évidement (10) à l'extrémité de l'arête de fond (10a') côté intérieur de la bande de roulement présente une valeur maximale (t_{Amax}) d'au moins 2,0 mm et d'au plus 60 % de la profondeur maximale (t_{QRmax}) de la rainure transversale (3).

3. Pneumatique de véhicule selon la revendication 2, **caractérisé en ce que** la valeur maximale (t_{Amax}) de la profondeur (t_{A}) de l'évidement (10) à l'extrémité côté intérieur de la bande de roulement de l'arête de fond (10a') est de 45 % à 55 % de la profondeur maximale (t_{QRmax}) de la rainure transversale (3).

4. Pneumatique de véhicule selon l'une quelconque des revendications 1 à 3, **caractérisé en ce que** le fond (10a) de l'évidement (10), considéré en coupe longitudinale à travers la rainure transversale (3), se raccorde tangentiellement à son extrémité côté extérieur à la surface extérieure (1b') de la section extérieure de nervure (1b).

5. Pneumatique de véhicule selon l'une quelconque des revendications 1 à 4, **caractérisé en ce que** le fond (10a) de l'évidement (10), considéré en section transversale orientée dans la direction circonférentielle, s'étend parallèlement à la périphérie de la bande de roulement.

6. Pneumatique de véhicule selon l'une quelconque des revendications 1 à 5, **caractérisé en ce que** le fond (10a) de l'évidement (10) présente, à son extrémité côté extérieur de la bande de roulement, une largeur (bsmax) de 1,5 mm à 4,0 mm, notamment de 2,5 mm à 3,5 mm.

7. Pneumatique de véhicule selon l'une quelconque des revendications 1 à 6, **caractérisé en ce que** l'évidement (10) dans la section intérieure de nervure (1a) se termine à une distance (a₄) d'au moins 3,0 mm, déterminée à partir du bord latéral de la surface de contact avec le sol (ligne L) dans la direction axiale.

8. Pneumatique de véhicule selon l'une quelconque des revendications 1 à 7, **caractérisé en ce que** l'évidement (10) dans la section extérieure de nervure (1b) se termine à une distance (as), déterminée au niveau de la périphérie de la bande de roulement, transversalement à la direction circonférentielle, de jusqu'à 10,0 mm, notamment de jusqu'à 3,5 mm, avant l'extrémité de la rainure transversale (3).

9. Pneumatique de véhicule selon l'une quelconque des revendications 1 à 8, **caractérisé en ce que** la surface latérale (10b), considérée en section transversale s'étendant dans la direction circonférentielle, s'étend selon un angle (ρ) de 2° à 6° par rapport à la direction radiale.
